# EUROPEAN PATENT SPECIFICATION

(11) **EP 2 591 536 B1**
(45) Date of publication and mention of the grant of the patent: **05.12.2018**
(21) Application number: 11738266.3
(22) Date of filing: 08.07.2011
(51) Int. Cl.: H02K 1/24, H02K 37/04

(54) **ELECTRIC MOTOR**
ELEKTRISCHER MOTOR
MOTEUR ÉLECTRIQUE

(30) Priority: 09.07.2010 GB 201011596
(43) Date of publication of application: 15.05.2013
(73) Proprietor: Imra Europe S.a.s., Brighton BN1 9RS (GB)
(72) Inventor: PRIDE, Adam, Brighton, Sussex BN41 2BE (GB)
(74) Representative: D Young & Co LLP
(86) International application number: PCT/GB2011/051284
(87) International publication number: WO 2012/004609

(56) References cited:
- EP-A1- 1 956 699
- WO-A1-00/64028
- US-A- 4 147 946
- US-B1- 6 452 301

## Description

### BACKGROUND OF THE INVENTION

The invention relates to electric motors, more especially but not exclusively to flux-switching and switched reluctance motors.

These motors are a class of electric motor capable of operating at high speeds, typically in excess of 30,000 rpm. These motors must have rotors with magnetic saliency which is provided by teeth. When the rotor is rotating the teeth produce turbulence in the gaps between the teeth and in the air-gap between the rotor and stator. This phenomenon is known in the art as "windage". Windage increases the amount of power required to operate the motor at a given speed, reduces the maximum speed at which the rotor can turn and increases the noise generated by the motor in operation. Various measures are known in the prior art to reduce the effects of windage in a reluctance motor in order to increase the power efficiency of the motor and to increase the rotational speeds achievable in such a motor.

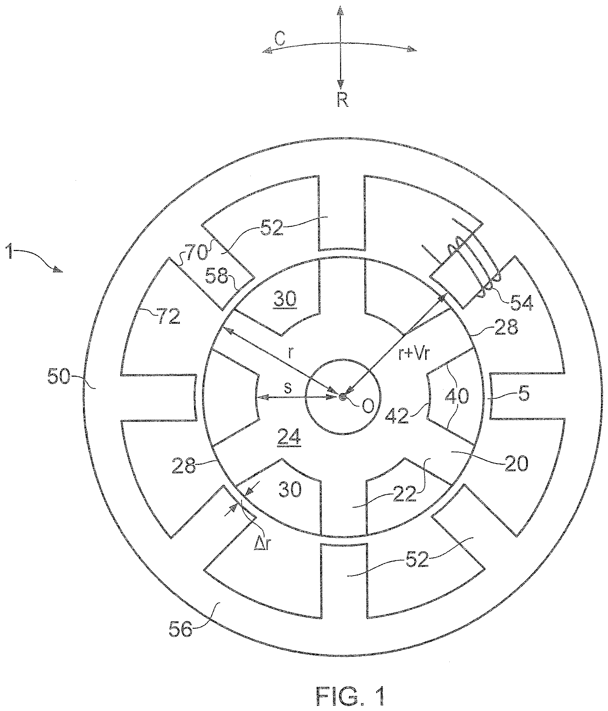

Figure 1 is a schematic cross-section of a basic generic prior art switched reluctance motor 1 incorporating features to reduce windage losses.

The motor comprises a rotor 20 and a stator 50. The rotor 20 and stator 50 both have generally cylindrical symmetry about a principal axis O which is the rotation axis of the rotor. It will be appreciated that the cross-section of Figure 1 is perpendicular to the rotation axis O, and the rotor and stator have physical features arranged principally relative to this rotation axis and circumferential and radial directions C and R as illustrated. The rotor 20 has a plurality of pairs of teeth, or poles 22, the teeth of each pair being disposed in opposed relationship relative to the rotation axis and extending in the radially outward direction R from a common hub 24 with which they are integrally formed.

The stator 50 also has a plurality of pairs of teeth, or poles 52, arranged in opposed relationship relative to the rotation axis and extending in the radially inward direction R. The stator poles are wound by coils (schematically shown on one of the stator teeth only), referred to as stator windings 54, which are used to drive the motor by a suitable drive sequence.

The rotor teeth 22 have radially outwardly facing, coupling surfaces 28 extending to lie on the surface of a nominal cylinder at a distance r from the rotation axis O, the rotor teeth coupling surfaces thus extending in the circumferential direction C (in the plane of the illustrated cross-section) and in the direction of the rotation axis O (out of the plane of the paper of Figure 1). The stator teeth 52 have radially inwardly facing, coupling surfaces 58 lying on a further nominal cylinder at a distance r + Δr from the rotation axis, so that the respective coupling surfaces of the rotor and stator teeth are maintained at a coupling gap 5 of magnitude Δr from each other in operation, where the coupling gap Δr is chosen to be sufficiently small that effective electromagnetic coupling takes place between the stator and rotor, but not impractically small having regard to differential thermal expansion and other operational and manufacturing tolerances.

Each stator tooth 52 is defined by the bottom, coupling surface 58 lying on the inner surface of the above-mentioned nominal hollow cylinder of radius r + Δr as well as by first and second side surfaces 70 that extend substantially parallel to the radial direction. Adjacent stator teeth are connected by base surfaces 72 which are the radially inner surfaces of the stator body 56 with which the stator teeth 52 are integrally formed.

To reduce windage losses, the regions between the rotor teeth are "filled" with non-magnetic material constructed so as to minimize eddy current losses. The space between circumferentially adjacent rotor teeth is filled by inserting non-magnetic pieces 30, so that the rotor has a smoothed, generally cylindrical outer surface. The non-magnetic pieces 30 may be considered to be inserts between circumferentially adjacent rotor teeth.

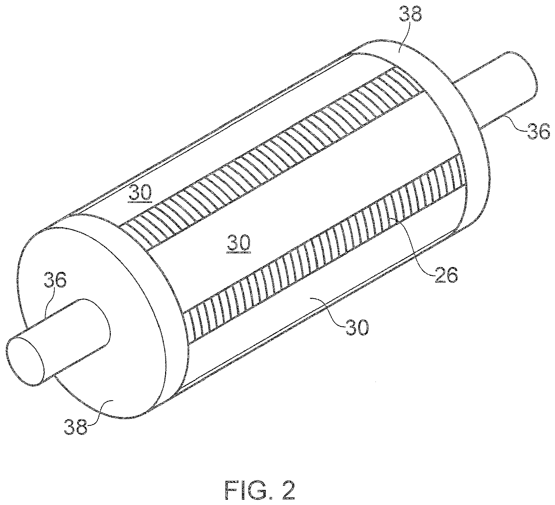

Figure 2 is a perspective view of an assembled rotor. As evident from the figure the rotor teeth are formed by a stack of magnetic laminations 26. The rotor is mounted for rotation on two shaft stubs 36 which are connected to respective end caps 38 that are fixed to the sub-assembly formed by the stack of laminations and the non-magnetic pieces 30.

Referring again to Figure 1, each rotor tooth 22 has the aforementioned coupling surface 28 as well as first and second side surfaces 40 that extend substantially parallel to the radial direction. Circumferentially adjacent rotor teeth are interconnected by the outer surface 42 of the rotor hub lying on the surface of a cylinder of radius 's' where 's' is substantially smaller than 'r'; 'r-s' being the height of the teeth. The rotor hub outer surfaces 42 may be equally well thought of as base surfaces of the teeth.

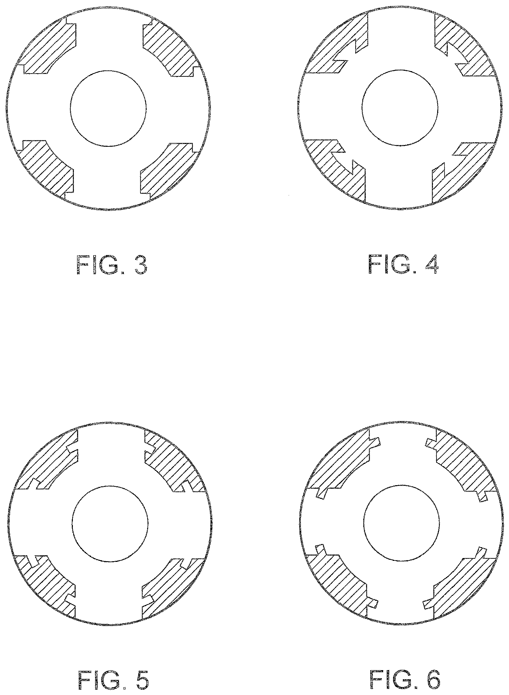

Figures 3 to 7 illustrate a number of known improvements on the basic design of Figures 1 & 2. These prior art improvements have in common that they adopt form-locked engagement of the non-magnetic pieces (illustrated with hatching) in the rotor better to secure the non-magnetic pieces against the centrifugal forces they experience during operation.

Figure 3 reproduces the design of the first embodiment of US 5,053,666. The rotor teeth have a circumferentially extended top surfaces to create a mushroom cross-section that provides a form-locking overhang to retain the non-magnetic pieces, which have corresponding recesses, referred to as shoulders in US 5,053,666.

Figure 4 reproduces the design of the invention of US 5,023,502 in which the non-magnetic pieces are form-locked to the rotor hub by a trapezoidal cross-section rib arranged on the outer surface of the rotor hub midway between adjacent teeth, the rib engaging in a correspondingly shaped groove in the non-magnetic piece in the manner of a dovetail joint.

Figure 5 reproduces the principal design of JP 2001-37178A in which the non-magnetic pieces are form-locked to the rotor teeth by tongue-and-groove arrangement with the tongues being formed in the side surfaces of the rotor teeth and the grooves in the abutting surfaces of the non-magnetic pieces, wherein both tongues and grooves are arcuate in cross-section extending in the circumferential direction.

Figure 6 reproduces an alternative design of JP 2001-37178A in which the tongues and grooves of Figure 5 are swapped over, with the grooves being formed in the side surfaces of the rotor teeth and the tongues in the abutting surfaces of the non-magnetic pieces.

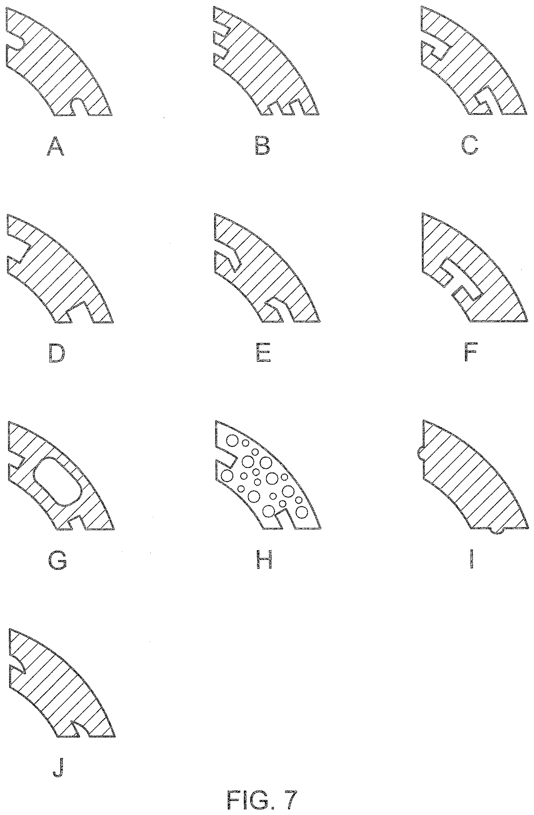

Figure 7a to 7j show further variants for the construction of the non-magnetic pieces, and thereby by inference the rotor teeth in which they engage. The variants of Figure 7a to 7h come from JP 2001-37178 A. The variant of Figure 7i comes from the second embodiment of US 5,053,666. The variant of Figure 7j comes from a design disclosed in US 5,023,502 as prior art.

Figure 7a differs from Figure 5 in that the grooves have semi-circular section internal surfaces, so that the tongues have correspondingly rounded ends.

Figure 7b shows a non-magnetic piece with two grooves per tooth, offset radially along the tooth's side surface.

Figure 7c shows a non-magnetic piece with a more intricate cross-section incorporating a barb.

Figure 7d shows a non-magnetic piece with a thicker groove, and hence thicker tongue in the tooth.

Figure 7e shows a groove having first and second length portions, wherein the first, outer length portion extends circumferentially, and the second, inner length portion extends both with a radially inward component as well as a circumferential component.

Figure 7f may be viewed as a variant of the design of Figure 4 with a T-section rib rather than a trapezoidal-section rib being arranged on the rotor hub.

Figure 7g shows a non-magnetic piece with the same outer form as Figure 5, but additionally including a hollow interior which has the effect of reducing the weight of the non-magnetic piece, and hence the centrifugal force it will experience in use.

Figure 7h shows a non-magnetic piece whose interior is porous which reduces weight for the same reason as the design of Figure 7g.

Figure 7i shows the design of the second embodiment of US 5,053,666 in which the rotor teeth have recesses and the non-magnetic pieces mating protuberances each of semi-circular cross-section.

Figure 7j shows a design disclosed as prior art in US 5,023,502 in which the non-magnetic pieces have wedge-shaped grooves to receive correspondingly-shaped barbs extending from side surfaces of the rotor teeth.

For the sake of completeness we observe the rotors shown in Figures 3-7 have two pairs of poles, rather than three pairs as in Figures 1 & 2. The number of pairs of poles is not significant for the design principles being discussed.

EP 0 736 952 A1 discloses some further designs including the concept of wrapping a securing cord or fibre around the rotor to secure the non-magnetic pieces.

JP 54 085304 U discloses several designs in which a tie rod is used to connect between adjacent rotor teeth.

EP 1 956 699 A1 discloses a rotor somewhat similar to that already mentioned of JP2001-37178A as shown in Figure 6 and also US 5,053,666 as shown in Figure 7I.

US 4,147,946 discloses a rotor having recesses for receiving the windings and a thin flexible wedge spanning each recess for retaining the windings during rotation of the rotor.

### SUMMARY OF THE INVENTION

The invention relates to an electric motor according to claim 1.

The referenced prior art only discloses non-magnetic pieces which fill the gaps between rotor teeth and abut the rotor hub. By contrast, the non-magnetic pieces of the invention are formed as bridge pieces spanning between adjacent rotor teeth and suspended above the rotor hub. Secure retention of the bridge pieces during use, when they experience extreme centrifugal forces, is achieved by the lugs that engage in the side surfaces of the rotor teeth extending part circumferentially and part radially inwardly which has the effect that the lugs self-lock into the slots when deformed under action of the centrifugal forces that occur when the rotor spins. With this design, a bridge piece can be secured in the adjacent rotor teeth with a relatively shallow recess, which is significant, since the deeper the recess, the greater the magnetic saturation in the teeth which reduces performance.

The lugs preferably have a curved profile such that the direction of extension of each lug into its slot has an increasing radially inward component the further it extends into the slot. Moreover, the upper and lower surfaces of each lug are preferably shaped and dimensioned relative to each other so as to inhibit rotation of the lugs out of their slots through action of centrifugal forces which arise when the rotor is spinning, for example by ensuring that, in cross-section, they are not arcs of concentric circles.

Moreover, connecting the upper surface of each lug with the abutting side surface of each lug, the bridge piece has a curved surface portion with a direction of curvature opposite to that of the upper surface of the lug.

Each bridge piece may also be provided with first and second hollow regions adjacent its first and second ends which have the effect of saving material and hence reducing the weight of the bridge piece. The hollow regions may have approximately triangular cross-section with rounded corners, one side of each hollow region extending approximately parallel to the side surface of the adjacent rotor tooth, the other two sides tapering away from the side surface to join each other.

### BRIEF DESCRIPTION OF THE DRAWINGS

The invention is now described by way of example only with reference to the following drawings.
Figure 1 is a schematic cross-section of a basic generic prior art design.
Figure 2 is a perspective view of an assembled rotor according to the design of Figure 1.
Figure 3 is a prior art design according to the first embodiment of US 5,053,666.
Figure 4 is a prior art design according to the invention of US 5,023,502.
Figure 5 is a prior art design according to the principal embodiment of JP 2001-37178 A.
Figure 6 is a prior art design according to an alternative embodiment of JP 2001-37178 A.
Figure 7a to 7j show further variants for the construction of the filling pieces according to different prior art documents.

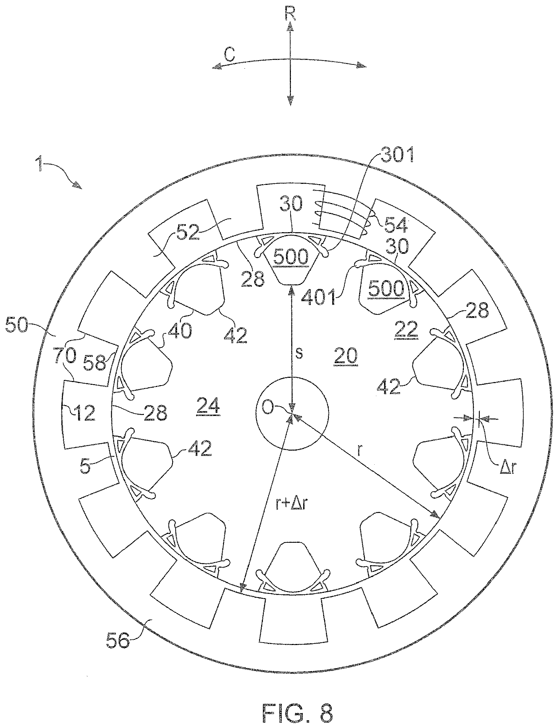

Figure 8 is a schematic cross-section of an electric motor according to an embodiment of the invention.

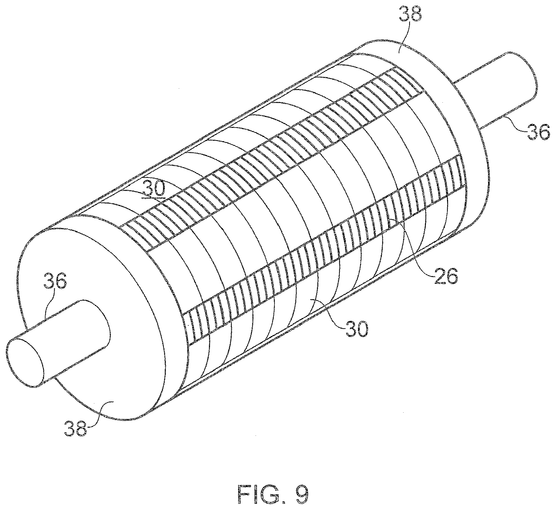

Figure 9 is a perspective view of an assembled rotor according to the embodiment of Figure 8.

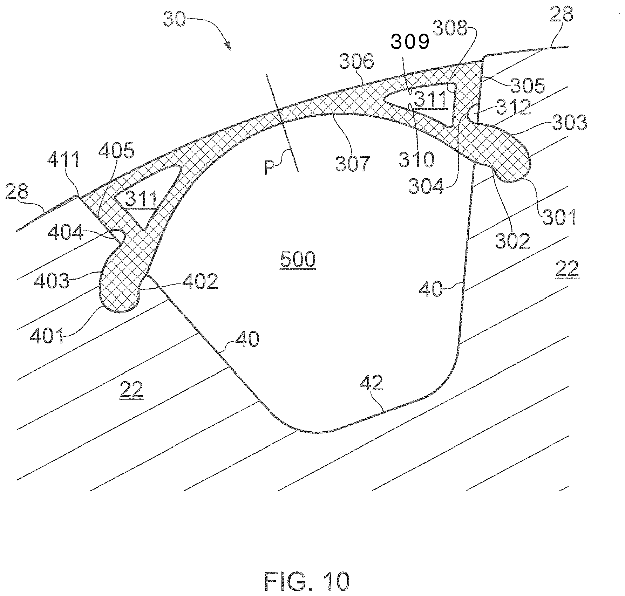

Figure 10 is a cross-section in more detail of a part of the motor of Figure 8.

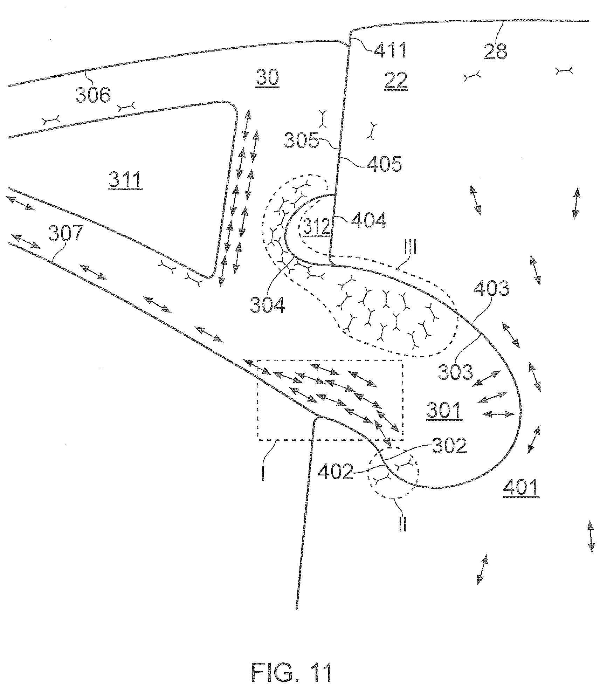

Figure 11 is a still further cross-section showing areas of compression and tension of the motor of Figure 8 while in use.

### DETAILED DESCRIPTION

Figure 8 is a schematic cross-section of a flux-switching motor 1 according to an embodiment of the invention. The motor comprises a rotor 20 and a stator 50. The rotor 20 and stator 50 both have generally cylindrical symmetry about a principal axis O which is the rotation axis of the rotor. It will be appreciated that the cross-section of the figure is perpendicular to the rotation axis O, and the rotor and stator have physical features arranged principally relative to this rotation axis and circumferential and radial directions C and R as illustrated. The rotor 20 has a plurality of pairs of teeth, or poles 22, the teeth of each pair being disposed in opposed relationship relative to the rotation axis and extending in the radially outward direction R from a common hub 24 with which they are integrally formed. Non-integral hubs are also possible. The stator 50 has a plurality of pairs of teeth, or poles 52, arranged in opposed relationship relative to the rotation axis and extending in the radially inward direction R. The stator poles are wound by coils, referred to as stator windings 54, one of which is schematically illustrated. The stator windings 54 serve to drive the motor by a suitable drive sequence.

The rotor teeth 22 have radially outwardly facing, coupling surfaces 28 extending to lie on the surface of a nominal cylinder at a distance r from the rotation axis O, the rotor teeth coupling surfaces thus extending in the circumferential direction C (in the plane of the illustrated cross-section) and in the direction of the rotation axis O (out of the plane of the paper of the figure). The stator teeth 52 have radially inwardly facing, coupling surfaces 58 lying on a further nominal cylinder at a distance r + Δr from the rotation axis, so that the respective coupling surfaces of the rotor and stator teeth are maintained at a coupling gap 5 of magnitude Δr from each other in operation, where the coupling gap Δr is chosen to be sufficiently small that effective electromagnetic coupling takes place between the stator and rotor, but not impractically small having regard to differential thermal expansion and other operational and manufacturing tolerances. For example, the gap size may be the order of 1 mm, or in the range from a few tenths of millimetres to several millimetres depending on specific design factors such as operational speed and size of the motor.

Each stator tooth 52 is defined by the bottom, coupling surface 58 lying on the inner surface of the above-mentioned nominal hollow cylinder of radius r + Δr as well as by first and second side surfaces 70 that extend substantially parallel to the radial direction. Adjacent stator teeth are connected by base surfaces 72 which are the radially inner surfaces of the stator body 56 with which the stator teeth 52 are integrally formed.

Each rotor tooth 22 has the aforementioned coupling surface 28 as well as first and second side surfaces 40. Circumferentially adjacent rotor teeth are interconnected by the outer surface 42 of the rotor hub lying on the surface of a cylinder of radius 's' where 's' is substantially smaller than 'r'; 'r-s' being the height of the teeth. The rotor hub outer surfaces 42 may be equally well thought of as base surfaces of the rotor teeth.

To reduce windage losses, bridge pieces 30 are provided which form bridge-like structures that span between the upper, i.e. radially outer, portions of the side surfaces 40 of adjacent rotor teeth 22 suspended above the rotor hub. The bridge pieces have relatively little weight compared with prior art pieces that fill the entire space between adjacent rotor teeth, since they are relatively thin structures occupying only the upper, i.e. radially outer, part of the space between adjacent rotor teeth. A substantial space 500 is therefore left under each "bridge". The bridge pieces are made of substantially non-magnetic material to ensure the magnetic flux flows down the rotor teeth. A typical material for the bridge pieces is a high-strength aluminium alloy.

The bridge pieces 30 are arranged in form-locked engagement with the rotor teeth 22. Each bridge piece 30 has first and second ends respectively connected to first and second mutually facing side surfaces of circumferentially adjacent rotor teeth by first and second lugs (or tangs) 301 which engage in slots (or recesses) 401 formed in the side surfaces 40 of the rotor teeth part way up the rotor teeth between the base surface 42 and the top surface 28.

The bridge pieces 30 are made of non-magnetic material, and constructed to minimize eddy current losses, e.g. by making the bridge pieces from thin sheet, for example 0.8 mm thick, and treating the surface of the bridge pieces to make the surface electrically non-conducting, e.g. by anodising.

Figure 9 is a perspective view of an assembled rotor. As evident from the figure the rotor teeth are formed by a stack of magnetic laminations 26. The rotor laminations in one example have a thickness of 0.35 mm. The laminated nature of the bridge pieces 30 and rotor laminations 26 is indicated schematically in the drawing, but not to scale. The rotor is mounted for rotation on two shaft stubs 36 which are connected to respective end caps 38 that are fixed to the sub-assembly formed by the stack of laminations and the bridge pieces 30. A plurality of bridge pieces per "valley" space 500 are provided along the length of the motor in the direction of the rotational axis O.

It will be appreciated that there are many design options known in the prior art regarding construction of a motor of this type, for example in respect of how the rotor parts are assembled and rotatably housed within the motor, and whether the rotor and stator teeth are individual parts or integrally formed in groups or as a single part. The invention encompasses all such known routine variations, specifically including all those disclosed in the referenced prior art documents.

Figure 10 is a more detailed illustration of a single bridge piece 30 together with the two adjacent rotor teeth 22 in which it engages. Many previously described features are visible and labelled again, namely: the rotor teeth and hub surfaces 28, 40, 42; the under-bridge valley space 500; and the lug and slot pairs 301, 401 with respective upper 303, 403 and lower 302, 402 surfaces. As can be seen clearly in Figure 10, the lugs 301 extend in a direction having components extending both circumferentially and radially inwardly with a curved profile such that the direction of extension of each lug into its slot 401 has an increasing radially inward component the further it extends into the slot. This structure is defined by each lug 301 having a radially outward, upper surface 303, which is curved and a radially inward, lower surface 302 which is also curved, the upper and lower surfaces 303, 302 being received by corresponding upper and lower surfaces 403, 402 of the slot 401.

The lug upper and lower surfaces may have arcuate portions, but those arcuate portions should not be concentric, i.e. should not be arcs with a common centre, so that it is not possible for the lug to rotate out of its slot.

The bridge piece has an upper or radially outward surface 306 and a lower or radially inward surface 307. The bridge piece 30 has mirror symmetry about a central mirror plane P and extends in the circumferential direction either side of the mirror plane to terminate in first and second ends. Each end is formed in part by the previously mentioned lugs 301 and in part by a side surface portion 305 which extends above, i.e. radially outwardly of, the lug. The side surface lies in abutment with a portion 405 of the side surface 40 of the tooth. In use, when the rotor is spinning, it will be appreciated that the bridge piece will tend to be deformed radially outwardly with the largest movement being at the mirror plane P in the middle of the bridge span, which will cause forces to be exerted principally in the circumferential direction on the side surface portion 305 which will be countered by corresponding reaction forces from the tooth side surface portion 405. The abutting surfaces at 305, 405 therefore have an important role in use.

Also at the ends of each bridge piece, there is provided a curved surface portion 304 that extends from the lug upper surface 303 with a direction of curvature opposite to that of the lug upper surface 303 to connect with the adjacent side surface 305 of the bridge piece so that there is a radial separation between each lug and its adjacent side surface, and a hollow region 312 of approximately semi-circular cross-section is formed bounded by the bridge piece curved surface portion 304 and a portion 404 of the tooth side surface 40.

The bridge piece also has first and second hollow regions 311 adjacent its first and second ends extending towards the middle of the bridge piece. The hollow regions 311 have approximately triangular cross-section with rounded corners, one side 308 of each hollow region extending approximately parallel to the side surface 40 of the adjacent rotor tooth 22, the other two sides 309, 310 tapering towards each other and then joining part way towards the mid plane P of the bridge piece 30.

The upper surfaces 306 of the bridge pieces 30 in combination with the top surfaces 28 of the rotor teeth 22 provide the rotor with a generally smooth outer surface lying on or close to the surface of the nominal cylinder of radius r in order to reduce windage. However, strict conformity to the aim of providing a circular cross-section surface of radius r is not required, and is in fact not provided by the illustrated design in which the upper surfaces 306 of the bridge pieces 30 are slightly recessed relative to, i.e. lie radially inward of, the coupling surfaces 28 of the rotor teeth 22. As can be seen in Figure 10, the bridge piece 30 is recessed slightly such that a small lip surface portion 411 forms the uppermost portion of the rotor tooth side surface 40. This small offset ensures that in use there is no contact between the bridge piece and the stator teeth, in particular in the middle section of the bridge piece where the bridge piece will move radially outwardly by the maximum amount under action of centrifugal forces as the rotor spins.

Figure 11 is a schematic cross-section illustrating one end of a bridge piece with its lug engaged in the corresponding slot in the rotor tooth. Regions under tension, and the direction of tension, are illustrated with double-headed arrows "<->". Regions under compression, and the direction of compression, are illustrated with the arrow-heads reversed ">-<". The magnitude of the tension/compression is very roughly indicated by the number of arrows drawn in. Three principal regions of stress arise which have been ringed with dashed lines.

Region I is confined to the bridge piece and covers a relatively large region adjacent to the lower surface 302 of the lug where the lug 301 joins the remainder of the bridge piece. Region I is relatively large and is under extreme tension.

Region II is a highly localised compression region encompassing a part of the bridge piece on the lower surface 302 and the contacting part of the rotor tooth.

Region III is confined to the bridge piece and is a large region of compression extending from near the upper end of (but not extending right to the upper end) the curved surface portion 304 all the way to the first part of the upper surface 303 of the lug. This region of compression extends quite deeply into the lug.

As can be seen the compression regions II and III lock the lug into the slot. As the centrifugal forces increase with increasing rotational speed, the compression increases which locks the lug increasingly more securely into its slot thereby securing the bridge piece in the tooth. Moreover, as centrifugal forces act more and more to increase the compression in region III, it can be seen that the curved portion 304 guides the compression around the hollow 312 where it is relieved in a gradual manner, thereby avoiding a sudden change in compression over a more localised region which would occur if the hollow 312 were not provided and the bridge piece abutted the tooth portion 404. The design with the hollow 312 therefore reduces the risk of cracking or fracture of the bridge piece.

The provision of hollow regions 312 and also 311 significantly reduce the stress on the teeth in use through reducing the amount of non-magnetic material needed for the part.

A key feature of this design is that the stresses arising from the centrifugal forces are accommodated by compression and tension, and shear is largely avoided. This is what allows a windage-loss reducing piece to be provided with relatively small amounts of material, and hence relatively low weight.

In summary, there has been described an electric motor 1 having a rotor assembly 20 and a stator assembly 50 of the type in which pieces of non-magnetic material are arranged in the space between adjacent rotor teeth 22 in order to suppress windage. The non-magnetic pieces are formed as bridge pieces 30 spanning between adjacent rotor teeth 22 and suspended above the rotor hub 24. Secure retention of the bridge pieces 30 during use, when they experience extreme centrifugal forces, is achieved by provision of lugs 301 which engage into slots 401 in the side surfaces 40 of the rotor teeth 22. The lugs 301 extend part circumferentially and part radially inwardly which has the effect that the lugs self-lock into the slots when deformed under action of the centrifugal forces that occur when the rotor assembly spins.

### PRIOR ART REFERENCES

US 5,053,666
US 5,023,502
JP 2001-37178 A
EP 0 736 952 A1
JP 54 085304 U
EP 1 956 699 A1
US 4,147,946

### REFERENCE NUMERALS

- O: principal axis / rotational axis
- C: circumferential direction
- R: radial direction
- P: mirror plane in bridge piece
- r: outer radius of rotor
- Δr: magnitude of rotor-stator coupling gap
- r + Δr: inner radius of stator
- s: rotor hub radius

- 1: electric motor
- 5: rotor-stator coupling gap
- 500: space under bridge pieces / inter-rotor-tooth tooth valleys

- 20: rotor / rotor assembly
- 22: rotor teeth or poles or pole pieces
- 24: rotor hub
- 26: rotor lamination
- 28: rotor teeth top or coupling surfaces
- 30: rotor bridge pieces

- 301: lug or tang
- 302: lower surface of lug
- 303: upper surface of lug
- 304: curved surface portion of bridge piece
- 305: abutting surface of bridge piece
- 306: upper surface of bridge piece
- 307: lower surface of bridge piece
- 308: side surface of hollow 311
- 309: upper surface of hollow 311
- 310: lower surface of hollow 311
- 311: hollow region in bridge piece
- 312: hollow region formed between bridge piece and rotor tooth
- 36: rotor shaft / shaft stubs
- 38: rotor end caps
- 40: rotor teeth first and second side surfaces
- 401: slot or recess
- 402: lower surface of slot
- 403: upper surface of slot
- 404: non-abutting portion of side surface
- 405: abutting portion of side surface
- 411: lip

- 42: rotor hub outer surface / rotor teeth base surface
- 50: stator / stator assembly
- 52: stator teeth or poles or pole pieces
- 54: stator coils/windings
- 58: stator teeth bottom or coupling surfaces
- 70: stator teeth first and second side surfaces
- 72: stator teeth base surface

## Claims

1. An electric motor (1) comprising a rotor assembly (20) of generally cylindrical symmetry about a rotation axis (O) thereof, and a stator assembly (50) arranged outside the rotor assembly, the stator assembly (50) also being generally cylindrically symmetric about the rotation axis (O), thereby defining radial and circumferential directions as viewed in cross-section perpendicular to the rotation axis (O); the stator assembly (50) having a plurality of stator pole pieces (52) extending radially inwardly to form stator teeth; the rotor assembly (20) having an outer radius referred to as the rotor radius (r) and the stator assembly (50) having an inner radius referred to as the stator radius which is larger than the rotor radius (r) by an amount which results in a coupling gap (5) between the rotor assembly (20) and the stator assembly (50) dimensioned to provide effective electromagnetic coupling therebetween, the rotor assembly (20) having a plurality of rotor pole pieces (22) extending radially outwardly from a rotor hub (24) to form rotor teeth (22) having first and second radially extending side surfaces (40) connected by a top surface (28), the rotor assembly (20) further including non-magnetic pieces (30) fitted between the rotor teeth (22) to reduce windage losses, each non-magnetic piece (30) having first and second ends respectively connected to first and second mutually facing side surfaces of circumferentially adjacent rotor teeth (22) by first and second lugs (301) which engage in slots (401) formed in the side surfaces (40) of the rotor teeth (22) part way up the rotor teeth (22) between the base surface (42) and the top surface (28), wherein the non-magnetic pieces (30) are formed as bridge pieces spanning between adjacent rotor teeth (22) and suspended above the rotor hub, wherein the lugs (301) extend in a direction having components extending both circumferentially and radially inwardly, and wherein radially outwardly of each lug (301) the bridge piece (30) has a side surface (305) arranged in abutment with a portion (405) of the side surface (40) of the adjacent tooth (22), wherein connecting the upper surface (303) of each lug (301) with the side surface (305) of each bridge piece (30), the bridge piece (30) has a curved surface portion (304) with a direction of curvature opposite to that of the upper surface (303) of the lug (301) to connect with the adjacent side surface (305) of the bridge piece (30) so that there is a radial separation between each lug (301) and its adjacent side surface (305), and a hollow region (312) of approximately semi-circular cross-section is formed bounded by the bridge piece curved surface portion (304) and a portion (404) of the tooth side surface (40).

2. The electric motor of claim 1, wherein the lugs have a curved profile such that the direction of extension of each lug into its slot has an increasing radially inward component the further it extends into the slot.

3. The electric motor of claim 1 or 2, wherein the upper (303) and lower surfaces (302) of each lug have non-concentric arcuate portions.

4. The electric motor of any preceding claim, wherein each bridge piece has first and second hollow regions (311) adjacent its first and second ends.

5. The electric motor of claim 4, wherein the hollow regions have approximately triangular cross-section with rounded corners, one side (308) of each hollow region extending approximately parallel to the side surface (40) of the adjacent rotor tooth, the other two sides (309, 310) tapering away from the side surface to join each other.

## Patentansprüche

1. Elektromotor (1), umfassend eine Rotoranordnung (20) mit allgemein zylindrischer Symmetrie um seine Rotationsachse (0), und eine Statoranordnung (50), die außerhalb der Rotoranordnung angeordnet ist, wobei die Statoranordnung (50) auch allgemein zylindrisch symmetrisch um die Rotationsachse (0) ist, wodurch radiale und Umkreisrichtungen definiert werden, betrachtet im Querschnitt senkrecht zu der Rotationsachse (0); wobei die Statoranordnung (50) eine Vielzahl von Statorpolteilen (52) aufweist, die sich radial einwärts erstrecken, um Statorzähne zu bilden; die Rotoranordnung (20) einen Außenradius aufweist, der als Rotorradius (r) bezeichnet wird, und die Statoranordnung (50) einen Innenradius aufweist, der als Statorradius bezeichnet wird, welcher um einen Betrag größer als der Rotorradius (r) ist, der zu einem Kopplungsspalt (5) zwischen der Rotoranordnung (20) und der Statoranordnung (50) führt, der dimensioniert ist, um effektive elektromagnetische Kopplung zwischen ihnen bereitzustellen, wobei die Rotoranordnung (20) eine Vielzahl von Rotorpolteilen (22) aufweist, die sich von einer Rotornabe (24) auswärts erstrecken, um Rotorzähne (22) mit sich radial erstreckenden ersten und zweiten Seitenoberflächen (40) zu bilden, die mittels einer Deckoberfläche (28) verbunden sind, wobei die Rotoranordnung (20) ferner nicht-magnetische Teile (30) einschließt, die zwischen den Rotorzähnen (22) eingepasst sind, um Lüftungsverluste zu reduzieren, wobei jedes nicht-magnetische Teil (30) erste und zweite Enden aufweist, die jeweils mit ersten und zweiten zueinander weisenden Seitenoberflächen von im Umkreis benachbarten Rotorzähnen (22) durch erste und zweite Nasen (301) verbunden sind, die in Schlitze (401), die in den Seitenoberflächen (40) der Rotorzähne (22) gebildet sind, einen Anteil des Weges von den Rotorzähnen (22) aufwärts zwischen der Basisoberfläche (42) und der Deckoberfläche (28) greifen, wobei die nichtmagnetischen Teile (30) als Brückenteile gebildet sind, die den Bereich zwischen benachbarten Rotorzähnen (22) überspannen und oberhalb der Rotornabe aufgehängt sind, wobei die Nasen (301) sich in eine Richtung mit Komponenten erstrecken, die sich sowohl im Umkreis als auch radial einwärts erstrecken, und wobei das Brückenteil (30) radial auswärts von jeder Nase (301) eine Seitenoberfläche (305) aufweist, die anliegend an einen Abschnitt (405) der Seitenoberfläche (40) des benachbarten Zahns (22) angeordnet ist, wobei sie die obere Oberfläche (303) jeder Nase (301) mit der Seitenoberfläche (305) jedes Brückenteils (30) verbinden, wobei das Brückenteil (30) einen gekrümmten Oberflächenabschnitt (304) mit einer Krümmungsrichtung aufweist, die entgegengesetzt zu derjenigen der oberen Oberfläche (303) der Nase (301) ist, um sich mit der benachbarten Seitenoberfläche (305) des Brückenteils (30) zu verbinden, so dass eine radiale Trennung zwischen jeder Nase (301) und ihrer benachbarten Seitenoberfläche (305) vorhanden ist,
und eine hohle Region (312) mit ungefähr halbkreisförmigem Querschnitt gebildet wird, die durch den gekrümmten Brückenteiloberflächenabschnitt (304) und einen Abschnitt (404) der Zahnseitenoberfläche (40) gebildet ist.

2. Elektromotor nach Anspruch 1, wobei die Nasen ein gekrümmtes Profil aufweisen, so dass die Erstreckungsrichtung von jeder Nase in ihren Schlitz eine zunehmende radial einwärts gerichtete Komponente aufweist, je weiter sie sich in den Schlitz hinein erstreckt.

3. Elektromotor nach Anspruch 1 oder 2, wobei die obere (303) und untere (302) Oberfläche von jeder Nase nicht-konzentrische bogenförmige Abschnitte aufweisen.

4. Elektromotor nach einem der vorhergehenden Ansprüche, wobei jedes Brückenteil erste und zweite hohle Regionen (311) benachbart zu seinem ersten und zweiten Ende aufweist.

5. Elektromotor nach Anspruch 4, wobei die hohlen Regionen einen ungefähr dreieckigen Querschnitt mit abgerundeten Ecken aufweisen, wobei eine Seite (308) von jeder hohlen Region sich ungefähr parallel zu der Seitenoberfläche (40) des benachbarten Rotorzahns erstreckt, wobei die anderen beiden Seiten (309, 310) von der Seitenoberfläche weg zulaufen, um sich miteinander zu verbinden.

## Revendications

1. Moteur électrique (1) comprenant un ensemble rotor (20) de symétrie généralement cylindrique autour d'un axe de rotation (0) de celui-ci, et un ensemble stator (50) disposé à l'extérieur de l'ensemble rotor, l'ensemble stator (50) étant également généralement cylindriquement symétrique autour de l'axe de rotation (0), définissant ainsi des directions radiales et circonférentielles telles que vues en section transversale perpendiculaire à l'axe de rotation (0) ; l'ensemble stator (50) ayant une pluralité de pièces polaires de stator (52) s'étendant radialement vers l'intérieur pour former des dents de stator ; l'ensemble rotor (20) ayant un rayon extérieur appelé rayon de rotor (r) et l'ensemble stator (50) ayant un rayon intérieur appelé rayon de stator qui est plus grand que le rayon de rotor (r) d'une dimension qui résulte en un espace d'accouplement (5) entre l'ensemble rotor (20) et l'ensemble stator (50) dimensionné pour permettre un accouplement électromagnétique efficace entre eux, l'ensemble rotor (20) ayant une pluralité de pièces polaires de rotor (22) s'étendant radialement vers l'extérieur à partir d'un moyeu de rotor (24) pour former des dents de rotor (22) ayant des première et seconde surfaces latérales s'étendant radialement (40) reliées par une surface supérieure (28), l'ensemble rotor (20) comprenant en outre des pièces non magnétiques (30) placées entre les dents de rotor (22) pour réduire les pertes par enroulement, chaque pièce non magnétique (30) ayant des première et seconde extrémités respectivement reliées à des première et seconde surfaces latérales tournées l'une vers l'autre de dents de rotor (22) adjacentes circonférentiellement par des première et seconde pattes (301) qui viennent en prise dans des fentes (401) formées dans les surfaces latérales (40) des dents de rotor (22) qui s'étendent partiellement le long des dents du rotor (22) entre la surface de base (42) et la surface supérieure (28), les pièces non magnétiques (30) étant formées en tant que pièces de pont s'étendant entre des dents de rotor (22) adjacentes et suspendues au-dessus du moyeu de rotor,
les pattes (301) s'étendant dans une direction ayant des composants s'étendant à la fois circonférentiellement et radialement vers l'intérieur, et radialement vers l'extérieur de chaque patte (301) la pièce de pont (30) ayant une surface latérale (305) disposée en butée avec une partie (405) de la surface latérale (40) de la dent (22) adjacente,
la surface supérieure (303) de chaque patte (301) étant reliée à la surface latérale (305) de chaque pièce de pont (30), la pièce de pont (30) ayant une partie de surface incurvée (304) avec une direction de courbure opposée à celle de la surface supérieure (303) de la patte (301) pour relier la surface latérale adjacente (305) de la pièce de pont (30) de sorte qu'il y ait une séparation radiale entre chaque patte (301) et sa surface latérale adjacente (305), et une région creuse (312) de section transversale approximativement semi-circulaire étant formée en étant limitée par la partie de surface incurvée (304) de pièce de pont et une partie (404) de la surface latérale (40) de dent.

2. Moteur électrique selon la revendication 1, les pattes ayant un profil incurvé de sorte que la direction d'extension de chaque patte dans sa fente ait un composant croissant radialement vers l'intérieur à mesure qu'il s'étend dans la fente.

3. Moteur électrique selon la revendication 1 ou 2, les surfaces supérieure (303) et inférieure (302) de chaque patte ayant des parties arquées non concentriques.

4. Moteur électrique selon l'une quelconque des revendications précédentes, chaque pièce de pont ayant des première et seconde régions creuses (311) adjacentes à ses première et seconde extrémités.

5. Moteur électrique selon la revendication 4, les régions creuses ayant une section transversale approximativement triangulaire avec des coins arrondis, un côté (308) de chaque région creuse s'étendant approximativement parallèlement à la surface latérale (40) de la dent de rotor adjacente, les deux autres côtés (309, 310) s'effilant en s'éloignant de la surface latérale pour se rejoindre.
